# EUROPEAN PATENT SPECIFICATION

(11) **EP 2 043 906 B1**
(45) Date of publication and mention of the grant of the patent: **16.03.2011**
(21) Application number: 07825927.2
(22) Date of filing: 18.07.2007
(51) Int. Cl.: B62D 57/028

(54) **VEHICLE**
FAHRZEUG
VÉHICULE

(30) Priority: 18.07.2006 ZA 200605949
(43) Date of publication of application: 08.04.2009
(73) Proprietor: GFL Mining Services Ltd., Johannesburg 2193 (ZA)
(72) Inventor: LEUSCHNER, Andries, Hermann, 0182 Wonderboom (ZA)
(74) Representative: Miller, James Lionel Woolverton
(86) International application number: PCT/IB2007/052858
(87) International publication number: WO 2008/010189

(56) References cited:
- EP-A- 0 177 112
- EP-A- 0 181 558
- EP-A- 0 212 456
- DE-A1- 4 239 987
- FR-A- 2 660 730
- US-A- 4 244 296
- US-A1- 2002 102 136

## Description

THIS INVENTION relates to a vehicle.

The Applicant is of opinion that a vehicle in accordance with this invention will be particularly suitable for travel in areas which are not easily accessible, for example because of hazardous conditions in such areas, because the areas are confined, or the like. In particular, the vehicle is expected to be suitable for travel in mines, more especially in underground mines, which application will specifically be borne in mind for purposes of this specification.

FR2660730A (Gautheron Christophe Philippe) discloses a "pipe crawler" which is intended to operate along a very specified and well defined path, i.e. the walls of a pipe. FR2660730A discloses articulation between separate leading and trailing portions of the body by means of which steering can be effected, provided that one of the leading or trailing portions can be stabilized or anchored such that the other portion can be displaced by articulation. Furthermore, the method of movement of the vehicle of FR2660730A invariably entails anchoring or stabilizing one of the portions between the opposing surfaces which then enables the other of the portions to be displaced, re-oriented, and the like. This is appropriate and effective in the field of operation of FR2660730A, i.e. intermediate well-defined, generally parallel, operating surfaces, i.e. diametrically opposed walls of a pipe. In those cases, the actions / reaction forces generated by bracing are generally along the same line of axis and in opposing directions. Force components in transverse or perpendicular directions are non-existent or negligible. Thus, two anchor points or bracing points are sufficient. However, that is not sufficient in the case of, for example, diverging or converging opposing surfaces such as frequently found in mining operations. In such an eventuality, it is frequently essential to have at least three anchor points while the fourth or further anchor points can be moved to a further position to release one of the previously engaged anchor points, etc. Because of the limitation that the limbs mounting the rollers in FR2660730A are rotatable about the longitudinal axis of the vehicle (or axes of the respective portions when they are relatively articulated), no one of the rollers can be advanced in a longitudinal direction while the remaining three remain anchored.

The Applicant wishes to define and describe a vehicle in accordance with the invention and its orientation without reference to the direction of gravity, i.e. without reference to top, bottom, upper/upward, lower/down and the like. Thus, for purposes of this invention, orientation will generally be referred to in relation to a support surface along which a vehicle is to travel, or the direction of travel. Thus, terms like "front/rear" indicate facing toward/away from the direction of travel; "slide" indicates transverse to the direction of travel, "underside/upper side" indicate respectively facing toward and away from a support surface or main support surface, and the like.

In accordance with a first aspect of this invention, there is provided a method of propelling a vehicle selectively in decumbent mode along a route over a decumbent support surface; and in braced mode along a route intermediate opposed inclined surfaces according to claim 1.

The method may include, in decumbent mode, displacing said one or more bracing rollers to a side of the body corresponding to a position of the drive rollers, said one or more bracing rollers assisting in supporting the vehicle on the decumbent surface.

The method may include selectively driving also the bracing rollers to assist in propelling the vehicle.

Advantageously, at least one of the drive rollers and the or at least one of the bracing rollers may be steerable, the method including selectively steering the steerable drive roller(s) and bracing roller(s) to steer the vehicle.

The method may include transmitting electrical power to the body via a feed cable from an external source, and distributing electrical power from a distributing device under control to respective electrical motors to drive the drive rollers.

Instead, the method may include deriving power to drive drive motors of the drive rollers from an internal combustion engine mounted in the body. One method may include driving a generator or alternator from the internal combustion engine and transmitting power in the form of electrical power via a controlled distribution device to respective drive motors of the drive rollers. Instead, or in addition, the method may include driving a hydraulic pump from the internal combustion engine to generate high pressure in hydraulic fluid and transmitting the hydraulic fluid under pressure via a controlled distribution device to respective drive motors of the drive rollers.

In accordance with a second aspect of the invention, there is provided a vehicle having a body, according to claim 8.

The vehicle is preferably an unmanned vehicle, typically being a robot which may carry tools for performing specific operations, for instance in a mining environment. The vehicle may thus be a mining robot.

One or more of the bracing rollers may be driven to assist in propelling the vehicle.

The limbs may be telescopic. The limbs may thus be telescopically retractable and extendible to vary the length of the limbs. The limbs may be hydraulically or mechanically telescopically actuated. Instead, or in addition, the limbs may include a scissor-like arrangement and/or an elbow-like arrangement to vary the length of the limbs.

It is thus to be understood that the spacing of the body from the respective walls or support surfaces can be controlled by controlling the length of the limbs. The vehicle may therefore include an electronic control system for dynamically controlling the length of the respective limbs, to restrict sideways movement of the body due to irregularities in the tunnel walls which are engaged by the respective rollers.

By way of development, the drive rollers may be in the form of carriages, each having a base, head and tail rollers rotatably mounted on the base, and an endless track extending around the head and tail rollers, in which one of the head and tail rollers is drivingly connected to the rotary drive motor.

Further, by way of development, each carriage may be steerable, by having the base steerably connected to a mounting member, and by means of a steering mechanism operative between the base and the mounting member.

Instead, the respective rollers may be in the form of wheels rotatably mounted to rotate about rotational axes.

Preferably, the vehicle may include a tool mounting substrate having mounting means for mounting a tool appropriate to perform a selected task.

In instances where the vehicle is a mining robot, the body will be dimensioned to permit travel of the vehicle along mine tunnels. For this reason, movability of the limbs relative to the body is preferably such that the distance from the body of the respective drive rollers and bracing rollers is variable, so that the drive rollers and bracing rollers can be forcibly pushed against opposing walls in a mine tunnel, to brace the vehicle in position in the tunnel and permit travelling along inclined tunnels. The body may optionally be elongated-capsule shaped.

The vehicle may be manned, remotely controlled, or autonomous.

The invention will now be further described by way of examples, with reference to the accompanying diagrammatic drawings, in which:
Figure 1 shows a three-dimensional view of a vehicle in the form of a mining robot in accordance with the invention, the robot being in decumbent mode;
Figure 2 shows a three-dimensional view of the vehicle of Figure 1 in a mining tunnel, the vehicle preparing for braced mode;
Figure 3 shows a three-dimensional view of the vehicle of Figure 1, with one of the vehicle's bracing rollers engaging a hanging wall of the mine tunnel;
Figure 4 shows a three-dimensional view of the vehicle of Figure 1 in braced mode;
Figure 5 shows a three-dimensional view of another embodiment of a robot in accordance with the invention;
Figure 6 shows, in a view corresponding to Figure 1, a variation of the vehicle of Figure 1;
Figure 7 shows, to a larger scale, in fragmentary, three-dimensional side view, attachment of a limb to a body of the vehicle;
Figure 8 shows, also to a larger scale, in fragmentary, three-dimensional side view, pivotal driving connection of a limb to a body of the vehicle;
Figures 9 and 10 show, respectively in fragmentary, three-dimensional side view, two embodiments of a limb mounting a roller of a vehicle in accordance with the invention; and
Figure 11 shows, schematically, in perspective view, a vehicle in accordance with the invention in the form of a mining robot, having an internal power generating unit.

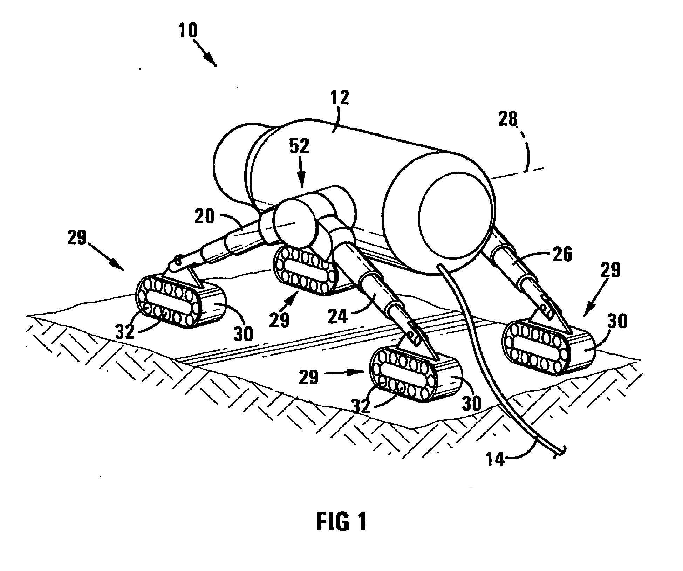

Referring now to Figure 1, reference numeral 10 generally indicates a vehicle, particularly a mining robot, in accordance with the invention. The robot 10 includes a body 12 which is elongated-capsule shaped. Although not shown in Figure 1 of the drawings, the body 12 carries tools for performing specific mining operations. The robot, in this embodiment, is connected to an electrical power supply by an electric cable 14.

Four limbs 20, 22, 24, 26 are pivotally connected to the body 12, two limbs on each side of the body 12, by means of composite pivot connections 52, at respective sides of the body. The limbs 20 to 26 are pivotally displaceable about a pivot axis 28 which is orientated transversely to the fore-and-aft direction of the body 12. Furthermore, each limb 20 to 26 is individually pivotable relative to the other limbs 20 to 26. Such pivotal displacement of the limbs 20 to 26 are actuated by respective servo motors mounted on the body 12.

The limbs 20 to 26 are variable in length in that they are telescopically retractable and extendible, each limb 20 to 26 having (in this embodiment) three telescopic segments. To this end, each limb 20 to 26 houses therein a servo-motor (not shown) to extend and retract the limb 20 to 26. In other embodiments, instead of, or addition to, the telescopic segments, the limbs may include scissor-like arrangements and/or elbow-like arrangements which are retractable and extendable (not shown).

A roller or support surface engaging member in the form of an endless track 30 forming part of a carriage 29, is mounted at a free end or distal end of each limb 20 to 26. Each endless track 30 is pivotally mounted on the associated limb 20 to 26, and each endless track 30 is mounted to run on spaced driven rollers 32 having a rolling axis substantially parallel to the pivot axis 28. The rollers 32 are driven by a motor (not shown) within the carriage 29. A power cable (not shown) extends within the limbs 20 to 26 to each respective endless carriage 29, to power the servo-motor which drives the rollers 32. In another embodiment (not shown), the rollers 32 may be driven via a drive shaft extending between a motor in the body 12 and the rollers 32.

Figure 1 shows the robot 10 in decumbent mode. All four legs or limbs 20 to 26 project operatively toward and engage a decumbent support surface. The robot 10 can thus travel as a four-wheeled land vehicle. The limbs 20 to 26 can be retracted and extended as necessary to counteract uneven terrain, such as debris and ditches, telescopic extension or retraction (or other type of extension and retraction) of the limbs 20 to 26 being controlled by an electronic control system carried by the body 12.

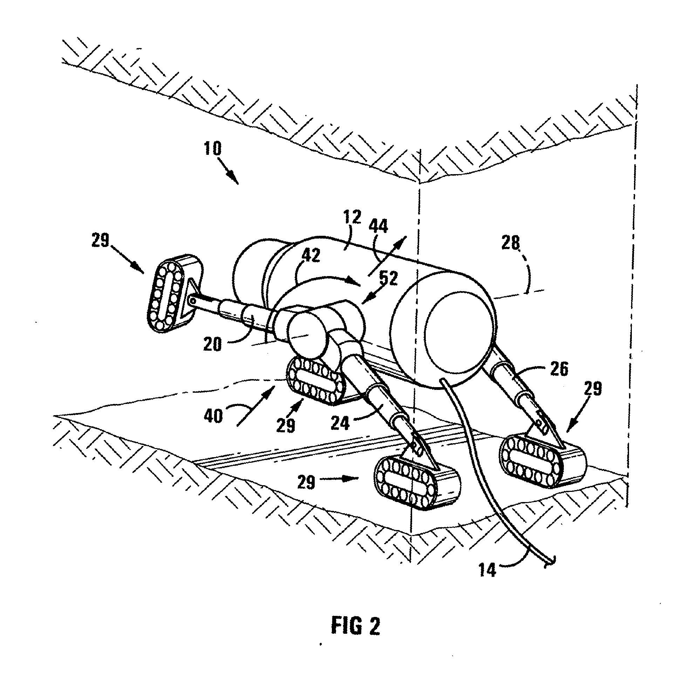

It may often be impractical or impossible for a four-wheeled ground vehicle to travel along a mine tunnel (such as mine shaft). Figures 2 to 4 show the steps for adjusting the robot 10 to braced mode. It is convenient to raise one limb 20 to 26 at a time so that at least three limbs are always in engagement with a support surface.

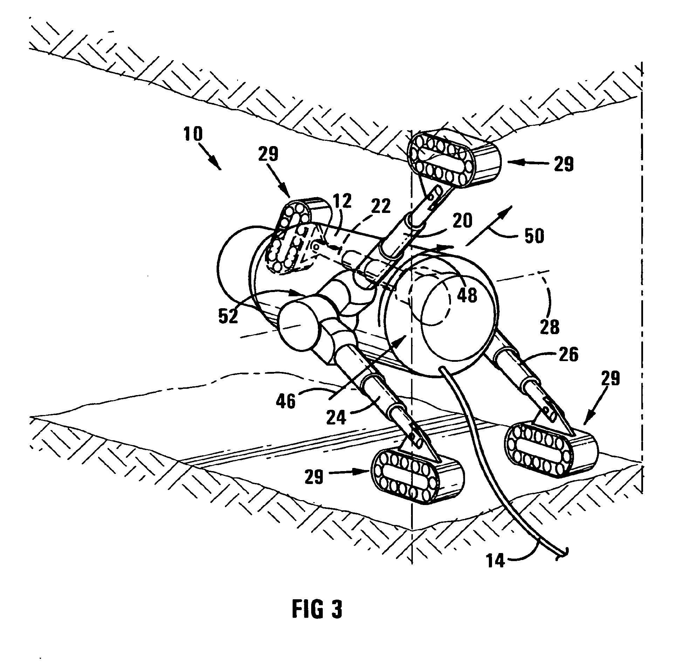

Referring now to Figures 2 and 3, the robot 10 is shown in a mine tunnel. A front left limb 20 of the robot 10 is displaced first. The limb 20 is telescopically retracted, as shown by arrow 40, so that it is free to pivot upwardly. During this process, the robot 10 is supported tripod-fashion by the three remaining limbs 22 to 26. Once sufficiently retracted, the limb 20 is pivoted forwardly and upwardly, as shown by arrow 42, up to roughly half a revolution about pivot axis 28 so that the limb 20 is diametrically opposed to its original position. Next, the limb 20 is telescopically extended, as shown by arrow 44, until it engages the hanging wall of the mine tunnel. The robot 10 is now braced between the floor and hanging wall as one limb 20 extends upwardly to engage to hanging wall, and three limbs 22 to 26 extend downwardly to engage the foot wall. It is not necessary for the foot and hanging wall to be a pre-defined distance apart, because the limbs 20 to 26 can extend or retract as necessary to compensate for varying distances between the walls.

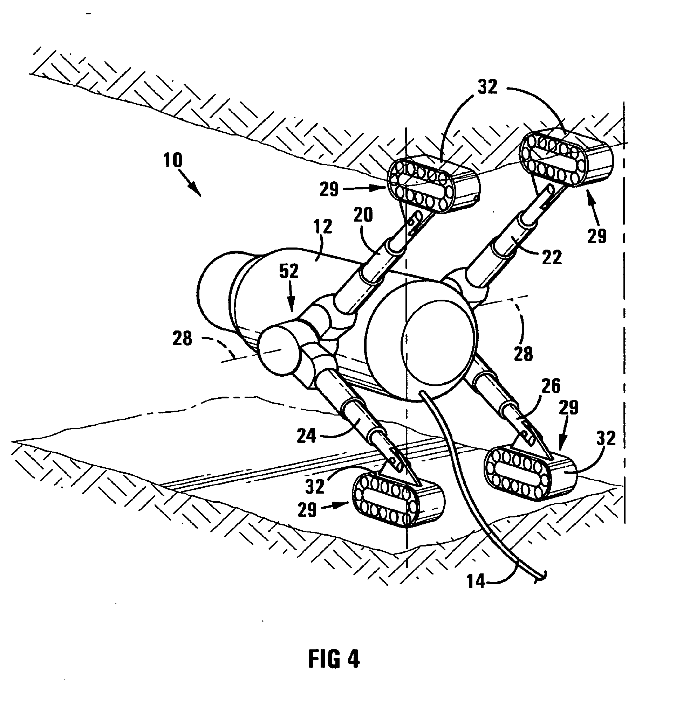

Figure 3 shows the front right limb 22 of the robot 10 being displaced. During the displacement of this limb 22, the robot 10 remains braced between the walls because limb 20 remains in engagement with the hanging wall, and limbs 24, 26 remain in engagement with the foot wall. The limb 22 is displaced in a fashion similar to that of the front left limb 20. As before, the front right limb 22 is retracted (arrow 46), pivoted through about half a revolution (arrow 48), and extended (arrow 50) to engage the hanging wall. The robot 10 is now fully braced between the opposed walls, by two limbs 20, 22 extending upwardly, and the other two limbs 24, 26 extending downwardly. It will be appreciated that, in the condition shown in Figure 3 and Figure 4, torque is applied to all of the limbs 20 to 26 by the associated servo motors, to achieve stability of the robot 10 and to propel the robot as desired. In the braced mode shown in Figure 3, the limbs 24, 26 are drive limbs, and the carriages 29 of the limbs 24, 26 at their free ends, provide drive rollers in accordance with the invention. Correspondingly, the limbs 20, 22 provide bracing limbs, and the carriages 29 of the bracing limbs 20, 22, at their free ends, provide bracing rollers in accordance with the invention.

Figure 4 shows the robot 10 with the limbs 20 to 26 fully deployed in braced mode. Because the robot 10 braces or supports itself against opposed walls, the robot 10 is not dependent on gravity to engage travelling surfaces. The robot 10 could therefore engage opposed side walls in an inclined or vertically extending tunnel, the limbs 20 to 26 in such a case projecting laterally, e.g. horizontally or near horizontally.

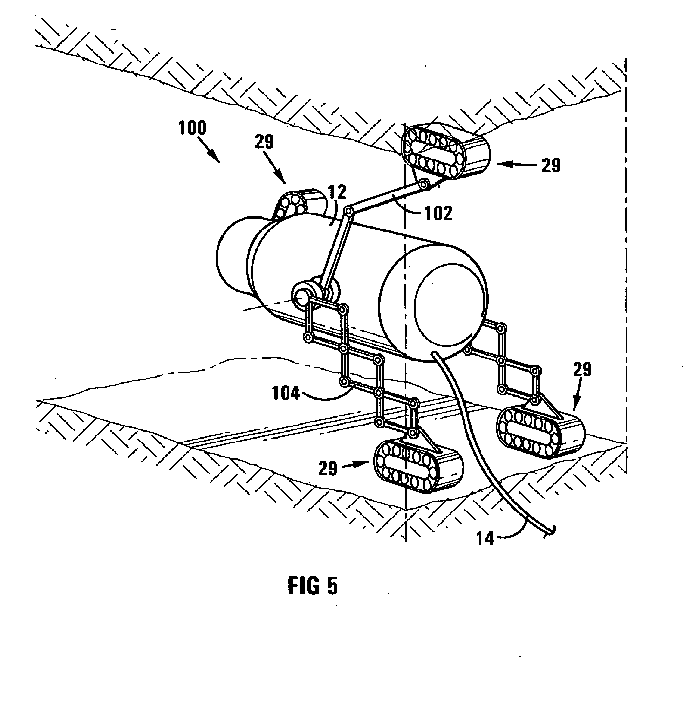

Figure 5 shows another embodiment of a robot 100 in accordance with the invention. The robot 100 includes an articulated limb 102 with an elbow-like joint, and a scissor-action extendible limb 104. The limbs 102, 104 function in similar fashion to limbs 20 to 26 for bracing the robot 100 against opposed walls and for propelling the robot in decumbent mode. It is to be understood that any one or more of the limbs as seen in Figures 1 to 4 may be telescopic, elbow-like, and/or scissor-like.

It is believed that the invention as exemplified has the advantage that the robot 10 can engage opposed, inclined surfaces, such as in tunnels, of varying orientation and dimensions, and in addition may travel on the ground (or other relatively level surfaces), rendering the robot 10 highly mobile. Furthermore, the robot 10 can be deployed in hostile environments, which might not be suitable for humans.

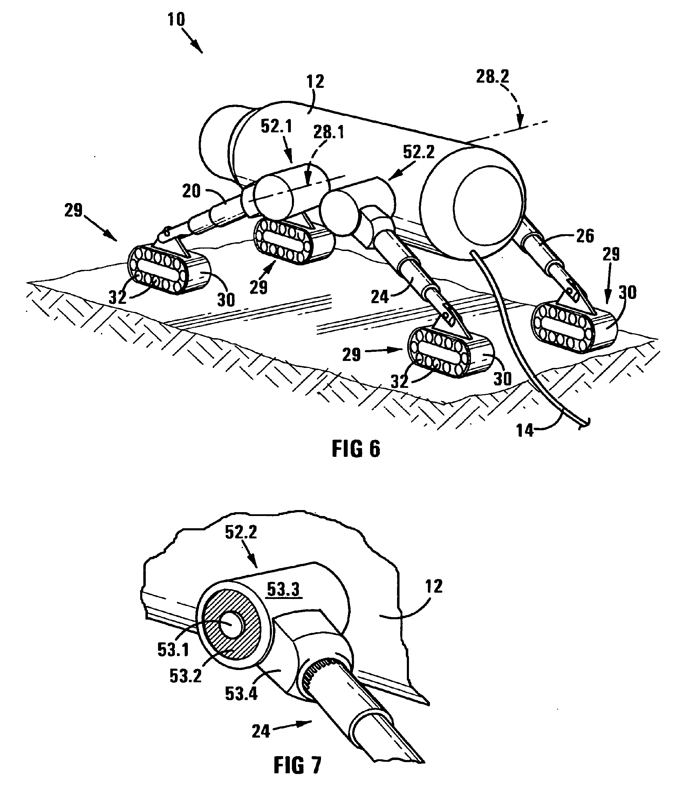

With reference to Figure 6, a variant of the mining robot of Figures 1 to 4 is shown in a view corresponding to Figure 1. The same reference numerals are used for the same or corresponding parts, and the vehicle is not described in detail again, but emphasis is merely placed on a single difference. Instead of having a common transverse axis 28 as shown in Figure 1, in the embodiment of Figure 6, the front limbs 20, 22 are pivoted about a first transverse axis 28.1 displaced slightly forwardly relative to the pivot axis 28 of Figure 1. Correspondingly, rear limbs 24, 26 are provided about a rear transverse axis 28.2 spaced rearwardly of the axis 28.1. If desired, diagonally opposed limbs and rollers, for example the limbs 20 and 26, can operate in conjunction for supporting the robot 10 on a decumbent surface, and the other, diagonally opposed, limbs 22, 24 can operate in conjunction to brace the robot against a surface opposed to the decumbent surface. It is an advantage of the embodiment of Figure 6, that pivot connections 52.1, 52.2 of the respective limbs to the body 12 are simplified and are not composite pivot connections as in the embodiment of Figures 1 to 4.

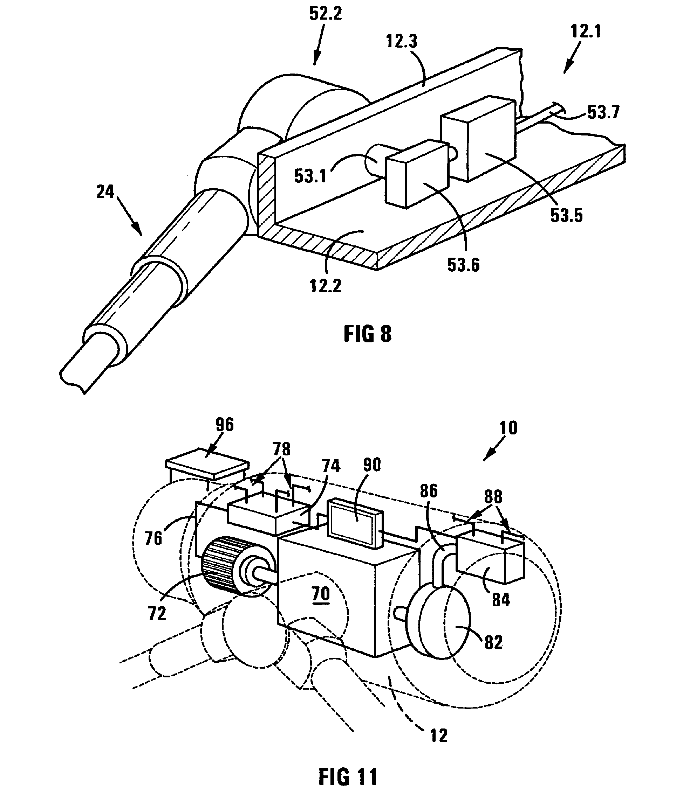

With reference to Figure 7, a pivot connection 52.2 of the embodiment of Figure 6 is shown to a larger scale in a fragmentary illustration of the robot 10 of Figure 6. The pivot connection comprises a drive shaft 53.1 extending from a pivot motor within the body 12, and which is described diagrammatically with reference to Figure 8 below. A circumferential sleeve 53.3 is concentrically secured to the shaft 53.1 via an annular resilient member 53.2, which may, for example, be in the form of a moulding. A base 53.4 of the limb 24 is integrally fast with the sleeve 53.3. Thus, in use, when the shaft 53.1 is pivoted to pivot the limb 24, resilience is built into the system to allow resilient pivoting of the limb 24 relative to the orientation of the drive spindle 53.1.

Further, with reference to Figure 8, a bracket 12.1 is shown which will be mounted within the body 12 of the robot 10. The pivot connection 52.2 is shown outwardly of a flange 12.3 of the bracket 12.1 which includes also a base 12.2. A pivot motor 53.5 is mounted on the base 12.2 and is electrically driven via electrical conductors shown in a cable 53.7. The electric motor 53.5 drives the drive shaft 53.1 via a right angled gearbox 53.6 having a high ratio, such that a relatively large number of revolutions of the motor 53.5 will be transmitted as less than one revolution of the drive shaft 53.1, but at correspondingly higher torque. It is thus to be appreciated that a relatively stall motor 53.5 can exert high pivot torque to the limb 24.

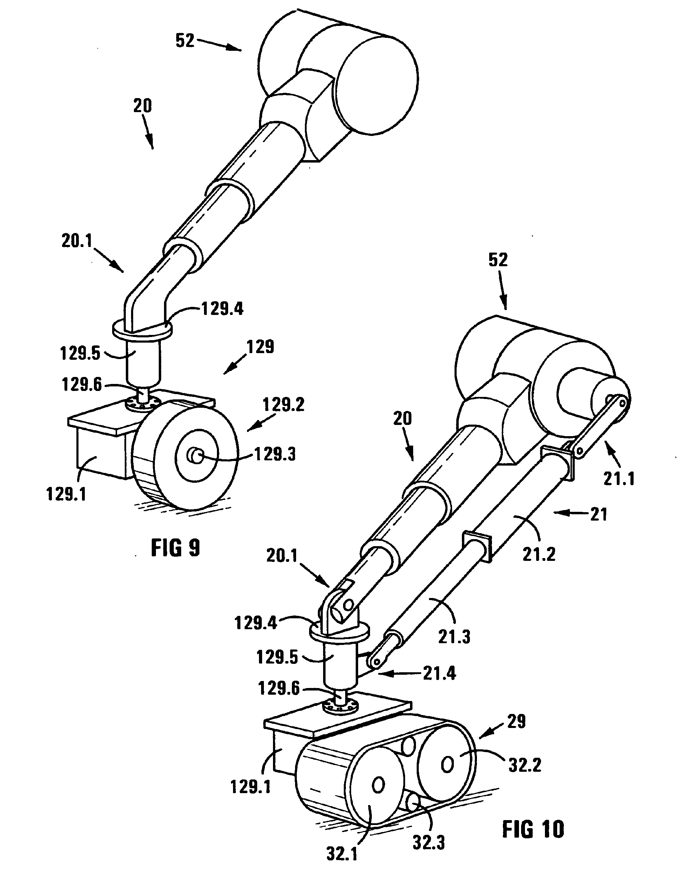

With reference to Figure 9, a limb 20 is shown connected to a carriage generally indicated by reference numeral 129 comprising a casing 129.1 encasing a drive motor and gearing having a drive shaft 129.3 to which a drive wheel 129.2 is drivingly connected. The casing 129.1 is connected via a steering shaft 129.6 to a steering motor encased in a steering casing 129.5. The casing 129.5 is mounted on a mounting member 129.4, secured, as shown at 20.1 to an end of the limb 20. Thus, in use, the steering motor, which is controlled via a central control of the robot to steer the wheel 129.2 is adjusted in an appropriate orientation corresponding to a desired orientation of the drive wheel 129.2. The drive wheel 129.2 is driven by the motor via the gearing encased in the casing 129.1. This embodiment illustrates that a roller in accordance with the invention can be in the form of a (simple) wheel, rather than the carriages having endless tracks as are shown elsewhere.

With reference to Figure 10, an arrangement similar to that of Figure 9 is shown, except that the wheel 129.2 is replaced by a carriage 29. The carriage 29 comprises a pair of heads and tail rollers 32.1 and 32.2 of which one, or both are driven from the drive motor within the casing 129.1. Steering is effected as was described for Figure 9. In addition, the orientation of the steering motor casing 129.5, and the steering shaft 129.6 and thus also of the casing 129.1 and the carriage 29, is controlled by means of an auxiliary extensible and contractible arm 21 comprising a link 21.1 connected to the pivot connection 52, a ram 21.2 for extending and contracting an arm 21.3, which is pivoted as shown at 21.4 to the casing 129.5 housing the steering motor. In addition, the connection of the limb 20 to the connecting member 129.4 is pivotal as shown at 20.1. The pivot connections 20.1 and 21.4 are about parallel axes. Thus, in use, the limb 20 and the arm 21 are extended and contracted correspondingly and equally and an adjustment contraction or extension is superimposed by the arm 21 to adjust the orientation as described above.

Two or more of the variants of the drive mechanism 29 or 129.2 can be used mounted on the body in relatively fixed configuration, i.e. not via extensible and contractible limbs, but bearing min mind that the bracing rollers at least will be moveable relative to the body to perform the bracing function.

With reference to Figure 11, a vehicle in accordance with the invention in the form of a mining robot is generally indicated by reference numeral 10. It has a body 12 supported on drive rollers and bracing rollers via extensible and contractible limbs as was described generally for the embodiments shown in Figures 1 to 10. For clarity of drawing, these components are shown in dotted outlines only. A further aspect of a robot in accordance with the invention is now described with reference to Figure 11.

The robot 10 includes a prime mover, more specifically in the form of an internal combustion engine 70 mounted within the body 12. The internal combustion engine 70 can, in other embodiments, be replaced by an electric motor powered by an umbilical cord or power cable shown, for example, in the embodiment of Figures 1 to 4. The motor or engine 70 has a drive shaft extending toward both ends and driving respectively an alternator or generator 72 for generating electrical power, and a hydraulic pump 82 for generating pressure in a closed hydraulic system which can easily be visualized by a person skilled in the art and which is not specifically illustrated.

The alternator 72 provides electrical power via an electrical conductor cable 76 to a distribution board 74 including switches from which individual electrical cables 78 lead to the respective electrical motors forming part of the robot 10 and as was illustrated and described with reference to the other Figures. Similarly, the hydraulic pump 82 pumps hydraulic fluid under pressure via a hydraulic duct 86 to a distribution unit 84 comprising a hydraulic accumulator and valves adapted to direct hydraulic fluid to various hydraulic motors or hydraulic rams as described with reference to the other drawings.

The body 12 further comprises a computer generally indicated by reference numeral 90 by means of which operation of the distribution board 74 and the hydraulic 84 (more specifically, respectively the electrical switches and valves) are regulated in desired fashion.

At one end of the body 12, in this embodiment a fore end, there is provided a mounting platform 96 for mounting tools or other equipment by means of which the robot 10 can perform a preselected task.

## Claims

1. A method of propelling a vehicle (10, 100) selectively in decumbent mode along a route over a decumbent support surface; and
in braced mode along a route intermediate opposed inclined surfaces; the method including
In decumbent mode, supporting a body (12) of the vehicle on drive rollers (32) proud of the vehicle (10, 100) at an underside of the body (12) on a decumbent support surface;
in braced mode, supporting the body (12) of the vehicle on the drive rollers (32) against a first of the inclined surfaces, and bracing the vehicle against the second, opposed inclined surface by means of one or more bracing rollers mounted on the body for forced extension and contraction relative to the body,
**characterized in that** the drive rollers and the one or more bracing rollers are mounted at free or distal ends of limbs (20, 22, 24, 26) which are mounted at proximal ends thereof on the body **(12),** the limbs being pivotal at their proximal ends about lateral axes to the body, and the limbs (20, 22, 24, 26) being extensible and contractible, the method including pivoting and extending / contracting the limbs to position the drive rollers (32) and the bracing rollers (32) appropriately against respective surfaces respectively for decumbent mode travel and for bracing mode travel; and
In which the method includes rotating the drive rollers (32) and also the one or more bracing rollers (32) under power to propel the vehicle.

2. A method as claimed in Claim 1 in which the drive rollers (32) and the one or more bracing rollers (32) are steerable, the method including selectively steering the steerable drive rollers and the one or more bracing rollers to steer the vehicle.

3. A method as claimed in Claim 1 or Claim 2 which includes, in decumbent mode, displacing said one or more bracing rollers (32) to a side of the body corresponding to a position of the drive rollers (32), said one or more bracing rollers, assisting in supporting the vehicle on the decumbent surface.

4. A method as claimed in Claim 1 or Claim 2 or Claim 3 which includes transmitting electrical power to the body (12) via a feed cable (14) from an external source, and distributing electrical power from a distributing device under control to respective electrical motors to drive the drive rollers.

5. A method as claimed in Claim 1 or Claim 2 or Claim 3 which includes deriving power to drive drive motors of the drive rollers and the one or more bracing rollers from an internal combustion engine (70) mounted in the body.

6. A method as claimed in Claim 5 which includes driving a generator or alternator (72) from the internal combustion engine (70) and transmitting power in the form of electrical power via a controlled distribution device (74) to respective drive motors of the drive rollers and the one or more bracing rollers.

7. A method as claimed in Claim 5 or Claim 6 which includes driving a hydraulic pump (82) from the internal combustion engine (70) to generate high pressure in hydraulic fluid and transmitting the hydraulic fluid under pressure via a controlled distribution device (84) to respective drive motors of the drive rollers and the one or more bracing rollers.

8. A vehicle (10, 100) having a body (12), and including
a plurality of drive rollers (32) standing proud of an underside of the body (12);
one or more bracing rollers (32) standing proud of a side of the body (12) opposite to said underside;
a rotary drive motor drivingly connected to said drive rollers and said one or more bracing rollers for rotating the rollers to propel the vehicle;
**characterized in that** the drive rollers (32) and the one or more bracing rollers (32) are mounted at free or distal ends of limbs (20, 22, 24, 26) which are mounted at proximal ends thereof on the body (12), the limbs being pivotal at their proximal ends about lateral axes to the body, the limbs being extensible and contractible:
in which the vehicle includes pivot and extension / contraction motors for pivoting and for extending / contracting the limbs relative to the body;
In which the vehicle includes a control for controlling the rotary drive motor and the extension / contraction motors, and the pivot motors.

9. A vehicle as claimed in Claim 8 in which the drive rollers (32) and the one or more bracing rollers (32) are steerable, the vehicle including steering motors for steering the drive rollers and the one or more bracing rollers.

10. A vehicle as claimed in Claim 8 or Claim 9 in which the limbs (20, 22, 24, 26) are telescopic.

11. A vehicle as claimed in Claim 8, Claim 9 or Claim 10, in which the drive rollers are In the form of carriages (29), each having a base; head and tail rollers (32.1, 32.2) rotatably mounted on the base, and an endless track (30) extending around the head and tail rollers (32.1, 32.2), in which one of the head, and tall rollers is drivingly connected to the rotary drive motor.

12. A vehicle as claimed in any one of Claim 8 to Claim 11 which includes a tool mounting substrate (96) having mounting means for mounting a tool appropriate to perform a selected task.

13. A vehicle as claimed in any one of Claim 8 to Claim 12, which includes a feed cable (14) for transmitting electrical power to the body (12) from an external source, and a distributing device for distributing electrical power under control to respective electrical motors of the vehicle.

14. A vehicle as claimed in any one of Claim 8 to Claim 12, which includes an internal combustion engine (70) for generating power for the vehicle.

15. A vehicle as claimed in Claim 14 which includes a generator or alternator (72) connected to the internal combustion engine (70) for generating power in the form of electrical power for powering the vehicle.

16. A vehicle as claimed in Claim 14 which includes a hydraulic pump (50) connected to the internal combustion engine (72) for generating high pressure in hydraulic fluid for powering the vehicle.

## Patentansprüche

1. Verfahren zum Antreiben eines Fahrzeugs (10, 100) wahlweise im liegenden Modus entlang einer Route über eine liegende Trägerfläche; und im abgespannten Modus entlang einer Route zwischen gegenüberliegenden geneigten Flächen; das Verfahren umfassend:
im liegenden Modus, das Abstützen eines Rumpfs (12) des Fahrzeugs auf Antriebsrollen (32), die auf einer liegenden Trägerfläche an einer Unterseite des Rumpfs (12) von dem Fahrzeug (10, 100) abstehen;
im abgespannten Modus, das Abstützen des Rumpfs (12) des Fahrzeugs auf den Antriebsrollen (32) auf einer ersten der geneigten Flächen und das Abspannen des Fahrzeugs gegen die zweite, gegenüberliegende geneigte Fläche mithilfe von einer bzw. mehreren Abspannrollen, die am Rumpf montiert sind, um im Verhältnis zum Rumpf zwangsweise ausgefahren und eingezogen zu werden,
**dadurch gekennzeichnet, dass** die Antriebsrollen und die eine bzw. die mehreren Abspannrollen an freien oder distalen Enden von Schenkeln (20, 22, 24, 26) montiert sind, welche an ihren proximalen Enden am Rumpf (12) montiert sind, wobei die Schenkel an ihren proximalen Enden um seitliche Achsen am Rumpf schwenkbar sind und die Schenkel (20, 22, 24, 26) ausfahrbar und einziehbar sind, wobei das Verfahren das Schwenken und
Ausfahren/Einziehen der Schenkel umfasst, um die Antriebsrollen (32) und die Abspannrollen (32) jeweils für die Fortbewegung im liegenden Modus und für die Fortbewegung im abgespannten Modus in geeigneter Weise gegen die jeweiligen Flächen zu positionieren; und
wobei das Verfahren das Rotieren der Antriebsrollen (32) und auch der einen bzw. der mehreren Abspannrollen (32) unter Leistung umfasst, um das Fahrzeug anzutreiben.

2. Verfahren gemäß Anspruch 1, wobei die Antriebsrollen (32) und die eine bzw. die mehreren Abspannrollen (32) lenkbar sind, wobei das Verfahren das wahlweise Lenken der lenkbaren Antriebsrollen und der einen bzw. der mehreren Abspannrollen umfasst, um das Fahrzeug zu lenken.

3. Verfahren gemäß Anspruch 1 oder Anspruch 2, wobei das Verfahren im liegenden Modus das Verlagern der einen bzw. der mehreren Abspannrollen (32) auf eine Seite des Rumpfs umfasst, die einer Position der Antriebsrollen (32) entspricht, wobei die eine bzw. die mehreren Abspannrollen das Abstützen des Fahrzeugs auf der liegenden Fläche unterstützen.

4. Verfahren gemäß Anspruch 1 oder Anspruch 2 oder Anspruch 3, wobei das Verfahren das Übertragen von elektrischer Leistung ausgehend von einer externen Quelle über ein Zuleitungskabel (14) zum Rumpf (12) sowie das gesteuerte Verteilen der elektrischen Leistung ausgehend von einer Verteilereinrichtung an die jeweiligen Elektromotoren umfasst, um die Antriebsrollen anzutreiben.

5. Verfahren gemäß Anspruch 1 oder Anspruch 2 oder Anspruch 3, wobei das Verfahren das Beziehen der Leistung zum Antreiben der Antriebsmotoren der Antriebsrollen und der einen bzw. der mehreren Abspannrollen von einem Verbrennungsmotor (70) umfasst, der in dem Rumpf montiert ist.

6. Verfahren gemäß Anspruch 5, wobei das Verfahren das Antreiben eines Generators bzw. Wechselstromgenerators (72) durch den Verbrennungsmotor (70) und das Übertragen von Leistung in Form von elektrischer Leistung über eine gesteuerte Verteilereinrichtung (74) an die jeweiligen Antriebsmotoren der Antriebsrollen und der einen bzw. der mehreren Abspannrollen umfasst.

7. Verfahren gemäß Anspruch 5 oder Anspruch 6, wobei das Verfahren das Antreiben einer Hydraulikpumpe (82) durch den Verbrennungsmotor (70), um Hochdruck in Hydraulikflüssigkeit zu erzeugen, sowie das Übertragen der unter Druck stehenden Hydraulikflüssigkeit über eine gesteuerte Verteilereinrichtung (84) an die jeweiligen Antriebsmotoren der Antriebsrollen und der einen bzw. der mehreren Abspannrollen umfasst.

8. Fahrzeug (10, 100), das über eine Rumpf (12) verfügt und umfasst eine Mehrzahl von Antriebsrollen (32), die an einer Unterseite des Rumpfs (12) abstehen;
eine oder mehrere Abspannrollen (32) die an einer Seite des Rumpfs (12) abstehen, welche der Unterseite gegenüberliegt;
einen Rotationsantriebsmotor, der antreibend mit den Antriebsrollen und der einen bzw. den mehreren Abspannrollen verbunden ist, um die Rollen in Rotation zu versetzen, damit das Fahrzeug angetrieben wird;
**dadurch gekennzeichnet, dass** die Antriebsrollen (32) und die eine bzw. die mehreren Abspannrollen (32) an freien oder distalen Enden von Schenkeln (20, 22, 24, 26) montiert sind, welche an ihren proximalen Enden am Rumpf (12) montiert sind, wobei die Schenkel an ihren proximalen Enden um seitliche Achsen am Rumpf schwenkbar sind und die Schenkel ausfahrbar und einziehbar sind;
wobei das Fahrzeug Schwenk- und Ausfahr-/Einziehmotoren zum Schwenken und zum Ausfahren/Einziehen der Schenkel im Verhältnis zum Rumpf umfasst;
wobei das Fahrzeug eine Steuereinrichtung zum Steuern des Rotationsantriebsmotors und der Ausfahr-/Einziehmotoren sowie der Schwenkmotoren umfasst.

9. Fahrzeug gemäß Anspruch 8, wobei die Antriebsrollen (32) und die eine bzw. die mehreren Abspannrollen (32) lenkbar sind, wobei das Fahrzeug Lenkmotoren zum Lenken der Antriebsrollen und der einen bzw. der mehreren Abspannrollen umfasst.

10. Fahrzeug gemäß Anspruch 8 oder Anspruch 9, wobei die Schenkel (20, 22, 24, 26) teleskopisch sind.

11. Fahrzeug gemäß Anspruch 8, Anspruch 9 oder Anspruch 10, wobei die Antriebsrollen die Form von Fahrgestellen (29) haben, die jeweils über eine Basis, über rotationsfähig an der Basis montierte Vorlauf- und Nachlaufrollen (32.1, 32.2) sowie über eine um die Vorlauf- und Nachlaufrollen (32.1, 32.2) verlaufende Raupenkette (30) verfügen, wobei eine der Vorlauf- und Nachlaufrollen antreibend mit dem Rotationsantriebsmotor verbunden ist.

12. Fahrzeug gemäß einem der Ansprüche 8 bis 11, wobei das Fahrzeug einen Werkzeugmontageträger (96) mit Montageeinrichtungen zum Montieren eines zur Durchführung einer ausgewählten Aufgabe geeigneten Werkzeugs umfasst.

13. Fahrzeug gemäß einem der Ansprüche 8 bis 12, wobei das Fahrzeug ein Zuleitungskabel (14) zum Übertragen von elektrischer Leistung ausgehend von einer externen Quelle zum Rumpf (12) sowie eine Verteilereinrichtung zum gesteuerten Verteilen der elektrischen Leistung an die jeweiligen Elektromotoren des Fahrzeugs umfasst.

14. Fahrzeug gemäß einem der Ansprüche 8 bis 12, wobei das Fahrzeug einen Verbrennungsmotor (70) zum Erzeugen von Leistung für das Fahrzeug umfasst.

15. Fahrzeug gemäß Anspruch 14, wobei das Fahrzeug einen mit dem Verbrennungsmotor (70) verbundenen Generator bzw. Wechselstromgenerator (72) umfasst, der dem Erzeugen von Leistung in Form von elektrischer Leistung zum Antreiben des Fahrzeugs dient.

16. Fahrzeug gemäß Anspruch 14, wobei das Fahrzeug eine mit dem Verbrennungsmotor (72) verbundene Hydraulikpumpe (50) umfasst, die dem Erzeugen von Hochdruck in Hydraulikflüssigkeit zum Antreiben des Fahrzeugs dient.

## Revendications

1. Procédé de propulsion d'un véhicule (10, 100) sélectivement
en mode décombant le long d'un parcours sur une surface de support décombante ; et
en mode renforcé, le long d'un parcours intermédiaire entre des surfaces inclinées opposées ; le procédé comprenant :
en mode décombant, le support d'un corps (12) du véhicule sur des cylindres d'entraînement (32) saillants du véhicule (10, 100) sur un côté inférieur du corps (12) sur une surface de support décombante ;
en mode renforcé, le support du corps (12) du véhicule sur les cylindres d'entraînement (32) contre une première des surfaces inclinées, et le renfort du véhicule contre la seconde surface inclinée opposée au moyen d'un ou plusieurs cylindres de renfort, montés sur le corps pour permettre une extension et une contraction forcées relativement au corps,
**caractérisé en ce que** les cylindres d'entraînement et le ou les cylindres de renfort sont montés à des extrémités libres ou distales des membres (20, 22, 24, 26) qui sont montés à leurs extrémités proximales sur le corps (12), les membres pivotant à leurs extrémités proximales autour d'axes latéraux du corps, et les membres (20, 22, 24, 26) étant extensibles et contractiles, le procédé comprenant le pivotement et l'extension/la contraction des membres pour positionner les cylindres d'entraînement (32) et les cylindres de renfort (32) convenablement contre des surfaces respectives respectivement pour un parcours en mode décombant et pour un parcours en mode renforcé ; et
dans lequel le procédé comprend la rotation des cylindres d'entraînement (32) et également du ou des cylindres de renfort (32) sous l'effet d'une puissance pour propulser le véhicule.

2. Procédé selon la revendication 1, dans lequel les cylindres d'entraînement (32) et le ou les cylindres de renfort (32) sont manoeuvrables, le procédé comprenant la manoeuvre sélective des cylindres d'entraînement manoeuvrables et du ou des cylindres de renfort afin de manoeuvrer le véhicule.

3. Procédé selon la revendication 1 ou la revendication 2, qui comprend, en mode décombant, le déplacement dudit un ou plusieurs cylindres de renfort (32) sur un côté du corps correspondant à une position des cylindres d'entraînement (32), ledit ou lesdits cylindres de renfort aidant à supporter le véhicule sur la surface décombante.

4. Procédé selon la revendication 1 ou la revendication 2 ou la revendication 3, qui comprend la transmission de la puissance électrique au corps (12) par le biais d'un câble d'alimentation (14) à partir d'une source extérieure, et la distribution de la puissance électrique par un dispositif de distribution sous contrôle à des moteurs électriques respectifs pour entraîner les cylindres d'entraînement.

5. Procédé selon la revendication 1, la revendication 2 ou la revendication 3, qui comprend la dérive de puissance pour entraîner les moteurs d'entraînement des cylindres d'entraînement et le ou les cylindres de renfort d'un moteur à combustion interne (70) monté dans le corps.

6. Procédé selon la revendication 5, qui comprend l'entraînement d'un générateur ou d'un alternateur (72) depuis le moteur à combustion interne (70) et la transmission de puissance, sous la forme de puissance électrique, par le biais d'un dispositif de distribution contrôlé (74) à des moteurs d'entraînement respectifs des cylindres d'entraînement et du ou des cylindres de renfort.

7. Procédé selon la revendication 5 ou la revendication 6, qui comprend l'entraînement d'une pompe hydraulique (82) par le moteur à combustion interne (70), afin de générer une pression élevée dans un fluide hydraulique et transmettre le fluide hydraulique sous pression par le biais d'un dispositif de distribution contrôlé (84) à des moteurs d'entraînement respectifs des cylindres d'entraînement et du ou des cylindres de renfort.

8. Véhicule (10, 100) ayant un corps (12) et comprenant :
une pluralité de cylindres d'entraînement (32) disposés de manière saillante d'un côté inférieur du corps (12) ;
un ou plusieurs cylindres de renfort (32) disposés de manière saillante d'un côté du corps (12) opposé audit côté inférieur ;
un moteur d'entraînement rotatif raccordé par entraînement auxdits cylindres d'entraînement et auxdits un ou plusieurs cylindres de renfort, pour faire tourner les cylindres afin de propulser le véhicule ;
**caractérisé en ce que** les cylindres d'entraînement (32) et le ou les cylindres de renfort (32) sont montés à des extrémités libres ou distales de membres (20, 22, 24, 26) qui sont montés par leurs extrémités proximales sur le corps (12), les membres étant pivotants à leurs extrémités proximales autour d'axes latéraux au corps, les membres étant extensibles et contractiles,
dans lequel le véhicule comprend des moteurs de pivotement et d'extension/contraction pour pivoter et pour étendre/contracter les membres relativement au corps ;
dans lequel le véhicule comprend une commande pour commander le moteur d'entraînement rotatif et les moteurs d'extension/contraction et les moteurs de pivotement.

9. Véhicule selon la revendication 8 dans lequel les cylindres d'entraînement (32) et le ou les cylindres de renfort (32) sont manoeuvrables, le véhicule comprenant des moteurs de manoeuvre, pour manoeuvrer les cylindres d'entraînement et le ou les cylindres de renfort.

10. Véhicule selon la revendication 8 ou la revendication 9, dans lequel les membres (20, 22, 24, 26) sont télescopiques.

11. Véhicule selon la revendication 8, la revendication 9 ou la revendication 10, dans lequel les cylindres d'entraînement sont sous la forme de chariots (29) ayant chacun une base ; des rouleaux de tête et de queue (32.1, 32.2) montés rotatifs sur la base et une piste sans fin (30) s'étendant autour des cylindres de tête et de queue (32.1, 32.2), dans lesquels un des cylindres de tête et de queue est raccordé par entraînement au moteur d'entraînement rotatif.

12. véhicule selon l'une quelconque des revendications 8 à 11, qui comprend un substrat de montage d'outils (96), ayant des moyens de montage pour monter un outil approprié pour réaliser une tâche sélectionnée.

13. Véhicule selon l'une quelconque des revendications 8 à 12, qui comprend un câble d'alimentation (14) pour transmettre une puissance électrique au corps (12) à partir d'une source extérieure, et un dispositif de distribution pour distribuer la puissance électrique sous contrôle aux moteurs électriques respectifs du véhicule.

14. Véhicule selon l'une quelconque des revendications 8 à 12, qui comprend un moteur à combustion interne (70) pour générer de la puissance pour le véhicule.

15. véhicule selon la revendication 14 qui comprend un générateur ou un alternateur (72) connecté au moteur à combustion interne (70) pour générer de la puissance sous la forme de puissance électrique afin d'alimenter le véhicule.

16. véhicule selon la revendication 14, qui comprend une pompe hydraulique (50) connectée au moteur à combustion interne (72) pour générer une pression élevée dans un fluide hydraulique, afin d'alimenter le véhicule.
